# EUROPÄISCHE PATENTSCHRIFT

(11) **EP 3 665 050 B1**
(45) Veröffentlichungstag und Bekanntmachung des Hinweises auf die Patenterteilung: **22.03.2023**
(21) Anmeldenummer: 18746909.3
(22) Anmeldetag: 26.07.2018
(51) Int. Cl.: B60T 8/34, B60T 8/40

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 09.08.2017 DE 102017213858
(43) Veröffentlichungstag der Anmeldung: 17.06.2020
(73) Patentinhaber: Continental Automotive Technologies GmbH, 30165 Hannover (DE)
(72) Erfinder: DOLMAYA, Joseph, 61440 Oberursel (DE); DINKEL, Dieter, 65824 Schwalbach (DE)
(74) Vertreter: Continental Corporation
(86) Internationale Anmeldenummer: PCT/EP2018/070270
(87) Internationale Veröffentlichungsnummer: WO 2019/030005

(56) Entgegenhaltungen:
- DE-A1-102014 225 954
- DE-A1-102016 201 047
- DE-A1-102016 203 111

## Beschreibung

Die Erfindung betrifft eine Bremsanlage für Kraftfahrzeuge gemäß dem Oberbegriff von Anspruch 1.

Bei Kraftfahrzeugen sind hydraulische Bremsanlagen weit verbreitet. Es ist zu erwarten, dass zukünftig Kraftfahrzeugbremsanlagen zum Einsatz kommen werden, welche für automatisiert fahrende Kraftfahrzeuge geeignet sind. Diese Bremsanlagen müssen grundsätzlich elektronisch ansteuerbare Systeme oder "Brake-by-wire"-Systeme sein. Dies bedeutet, dass eine Bremsanforderung über elektronische oder elektrische Steuersignale angefordert und vom System ohne Zutun des Fahrers umgesetzt werden kann. Besonders in solchen Systemen muss aus Sicherheitsgründen eine ausreichend hohe Verfügbarkeit des Bremsanlage und auch der fremdansteuerbaren Bremsfunktion mit radindividueller Regelung gewährleistet sein.

In der WO 2016/096538 A1 wird eine Bremsanlage für Kraftfahrzeuge beschrieben, welche vier hydraulisch betätigbare Radbremsen, einen unter Atmosphärendruck stehen Druckmittelvorratsbehälter, eine erste elektrohydraulische Bremsensteuervorrichtung, welche für jede der vier Radbremsen einen radindividuellen Ausgangsdruckanschluss besitzt, und eine der ersten Bremsensteuervorrichtung nachgeschaltete, zweite elektrohydraulische Bremsensteuervorrichtung umfasst. Die zweite Bremsensteuervorrichtung umfasst für jede der vier Radbremsen einen radindividuellen Eingangsdruckanschluss, einen radindividuellen Ausgangsdruckanschluss, eine Pumpe und Ventile, wobei der hydraulische Aufbau pro Radbremse gleich ist. Die vorbekannte zweite Bremsensteuervorrichtung ist demnach vierkreisig aufgebaut mit vier gleichen (Rad)Bremskreisen. Die vorbekannte Bremsanlage erfüllt zwar hohe Anforderungen bezüglich der Verfügbarkeit der Einstellung von radindividuellen Bremsdrücken, ist jedoch relativ aufwändig und somit kostenintensiv.

Es sind Bremsanlagen für Kraftfahrzeuge mit vier hydraulisch betätigbaren Radbremsen bekannt, z.B. aus der DE 10 2016 201 047 A1, welche eine erste elektrohydraulische Bremsensteuervorrichtung und eine der ersten Bremsensteuervorrichtung nachgeschaltete, zweite elektrohydraulische Bremsensteuervorrichtung umfassen, wobei die zweite Bremsensteuervorrichtung weniger aufwändig ausgeführt ist und nur zwei Pumpen, eine je Bremskreis mit zwei Radbremsen, umfasst. Dabei sind die erste und die zweite Bremsensteuervorrichtung jedoch über nur zwei hydraulische Verbindungen miteinander verbunden. D.h. die erste Bremsensteuervorrichtung besitzt lediglich zwei, bremskreisindividuelle Ausgangsdruckanschlüsse und die zweite Bremsensteuervorrichtung umfasst für jeden ihrer zwei Bremskreise nur einen (bremskreisindividuellen) Eingangsdruckanschluss.

In der DE 10 2016 203 111 A1 ist eine Bremsanlage für Kraftfahrzeuge beschrieben, welche vier hydraulisch betätigbare Radbremsen, einen unter Atmosphärendruck stehen Druckmittelvorratsbehälter, eine erste elektrohydraulische Bremsensteuervorrichtung, welche für jede der vier Radbremsen einen radindividuellen Ausgangsdruckanschluss besitzt, und eine der ersten Bremsensteuervorrichtung nachgeschaltete, zweite elektrohydraulische Bremsensteuervorrichtung umfasst. Die zweite Bremsensteuervorrichtung umfasst für jede der vier Radbremsen einen radindividuellen Eingangsdruckanschluss und einen radindividuellen Ausgangsdruckanschluss sowie zwei

Pumpen, eine je Bremskreis mit zwei Radbremsen. Dabei saugt jede der zwei Pumpen über eine in der ersten

Bremsensteuervorrichtung angeordnete Parallelschaltung von einem Auslassventil mit einem Rückschlagventil Druckmittel aus dem Druckmittelvorratsbehälter der ersten Bremsensteuervorrichtung an.

Es ist Aufgabe der vorliegenden Erfindung, eine alternative Bremsanlage für Kraftfahrzeuge mit zumindest vier hydraulisch betätigbaren Radbremsen bereitzustellen, welche hohe Anforderungen bezüglich der Verfügbarkeit der Einstellung von radindividuellen oder zumindest achsindividuellen Bremsdrücken erfüllt und zum automatisierten Fahren geeignet ist.

Diese Aufgabe wird erfindungsgemäß durch eine Bremsanlage gemäß Anspruch 1 gelöst.

Der Erfindung liegt der Gedanke zugrunde, eine erste elektrohydraulische Bremsensteuervorrichtung mit radindividuellen Ausgängen mit einer nachgeschalteten zweiten elektrohydraulischen Bremsensteuervorrichtung mit radindividuellen Eingängen und radindividuellen Ausgängen zu kombiniere, wobei die zweite Bremsensteuervorrichtung eine erste Pumpe, deren Druckseite mit einer ersten und einer zweiten Radverbindungsleitung der vier Radverbindungsleitungen verbunden ist, und eine zweite Pumpe, deren Druckseite mit den zwei anderen Radverbindungsleitungen verbunden ist, umfasst. Die zweite Bremsensteuervorrichtung umfasst einen ersten und einen zweiten unter Atmosphärendruck stehenden Druckmittelvorratsbehälter, welche in die zweite Bremsensteuervorrichtung integriert sind.

Die Erfindung bietet den Vorteil, dass sie die funktionalen Anforderungen an eine Bremsanlage für das hochautomatische Fahren erfüllt und dennoch relativ einfach und kostengünstig ist. Durch die in die zweite Bremsensteuervorrichtung integrierten Druckmittelvorratsbehälter wird Druckmittel für die Pumpen in der zweiten Bremsensteuervorrichtung bereitgehalten. So kann das Druckmittel direkt aus dem integrierten Druckmittelvorratsbehälter angesaugt werden. Strömungswiderstände werden so minimiert und die Verfügbarkeit von Druckmittel zum Druckaufbau mittels der zweiten Bremsensteuervorrichtung erhöht.

Bevorzugt ist die erste Druckseite nicht mit den zwei anderen Radverbindungsleitungen, namentlich der dritten und der vierten Radverbindungsleitung, (im Sinne der Möglichkeit eines Aufbaus von Bremsdruck) hydraulisch verbunden.

Bevorzugt ist die zweite Druckseite nicht mit der ersten und der zweiten Radverbindungsleitung (im Sinne der Möglichkeit eines Aufbaus von Bremsdruck) hydraulisch verbunden.

Bevorzugt umfasst die zweite Bremsensteuervorrichtung für jede Radbremse ein stromlos geschlossenes Einlassventil um Druckhaltephase für jede Radbremse radindividuell umsetzen zu können.

Jede der Pumpen ist bevorzugt mit ihrer Druckseite mit mindestens einer der ihr zugeordneten Radbremsen über ein stromlos geschlossenes Einlassventil direkt verbunden. Hierdurch ist an zumindest dieser Radbremsen eine Druckänderung mit hoher Dynamik möglich, da der Strömungswiderstand der Verbindung Druckseite zu Radbremse gering ist.

Unter dem Begriff "direkt (hydraulisch) verbunden" wird verstanden, dass kein weiteres schaltbares Ventil (neben dem Einlassventil) in der hydraulischen Verbindung angeordnet ist.

Bevorzugt ist jede der Pumpen mit ihrer Druckseite mit den beiden ihr zugeordneten Radbremsen über ein stromlos geschlossenes Einlassventil direkt verbunden.

Gemäß einer bevorzugten Ausführungsform der erfindungsgemäßen Bremsanlage umfasst die erste Bremsensteuervorrichtung eine Druckregelventilanordnung zum Einstellen radindividueller Drücke an den radindividuellen Ausgängen der erste Bremsensteuervorrichtung und eine elektrisch ansteuerbare Druckquelle zum Aufbau eines Bremsdruckes.

Weiterhin ist es bevorzugt, dass die erste Bremsensteuervorrichtung einen durch ein Bremspedal betätigbaren Hauptbremszylinder umfasst.

Die erste Bremsensteuervorrichtung ist gemäß einer bevorzugten Ausführungsform der Erfindung als eine bauliche Einheit in Form eines Bremsensteuergeräts mit einer elektronischen Steuer- und Regeleinheit und einer hydraulischen Steuer- und Regeleinheit ausgeführt. Die elektronische Steuer- und Regeleinheit ist besonders bevorzugt zur Ansteuerung der Druckregelventilanordnung und der elektrisch ansteuerbare Druckquelle ausgebildet. So kann die zweite Bremsensteuervorrichtung einfach optional zu der ersten Bremsensteuervorrichtung hinzugefügt werden (Baukastenprinzip).

Bevorzugt ist die zweite Bremsensteuervorrichtung als eine bauliche Einheit in Form eines Bremsensteuergeräts mit einer zweiten elektronischen Steuer- und Regeleinheit und einer zweiten hydraulischen Steuer- und Regeleinheit ausgeführt, wobei die zweite elektronische Steuer- und Regeleinheit zur Ansteuerung der ersten und zweiten Pumpe ausgebildet ist.

Zur Erhöhung der Verfügbarkeit der Bremsanlage umfasst die Bremsanlage bevorzugt zumindest zwei, voneinander unabhängige elektrische Energiequellen. Besonders bevorzugt wird die erste Bremsensteuervorrichtung von einer ersten elektrischen Energiequelle und die zweite Bremsensteuervorrichtung von einer zweiten elektrischen Energiequelle mit elektrischer Energie versorgt.

Der erste und der zweite Druckmittelvorratsbehälter sind bevorzugt mit dem Hauptdruckmittelvorratsbehälter verbunden. So liegt stets ausreichend Druckmittel in der zweiten Bremsensteuervorrichtung vor.

Bevorzugt sind der erste und der zweite Druckmittelvorratsbehälter unmittelbar über eine in der zweiten Bremsensteuervorrichtung angeordnete Ausgleichsleitung miteinander verbunden.

Gemäß einer bevorzugten Ausführungsform ist die erste Saugseite mit dem ersten Druckmittelvorratsbehälter über ein erstes Ansaugventil hydraulisch verbunden und die zweite Saugseite ist mit dem zweiten Druckmittelvorratsbehälter über ein zweites Ansaugventil verbunden. Jede Pumpe hat so Zugriff auf einen (eigenen) internen Druckmittelvorratsbehälter.

Gemäß einer anderen bevorzugten Ausführungsform ist die erste Druckseite mit der zweiten Druckseite hydraulisch verbunden. Somit ist die erste Pumpe zusätzlich mit der dritten und der vierten Radverbindungsleitung hydraulisch verbunden und die zweite Pumpe ist zusätzlich mit der ersten und der zweiten Radverbindungsleitung hydraulisch verbunden. Die Bremsensteuervorrichtung kann daher einen einkreisigen Druckaufbau durchführen.

Bevorzugt ist die erste Saugseite mit der zweiten Saugseite hydraulisch verbunden, so dass beide Pumpen je aus beiden Druckmittelvorratsbehältern Druckmittel ansaugen können.

Bevorzugt sind die erste Saugseite und die zweite Saugseite über ein einziges Ansaugventil mit dem ersten und dem zweiten Druckmittelvorratsbehälter verbunden. So kann ein schaltbares Ventil eingespart werden.

Gemäß einer bevorzugten Ausführungsform ist die erste Druckseite über ein erstes Einlassventil mit der ersten Radverbindungsleitung und über ein zweites Einlassventil mit der zweiten Radverbindungsleitung hydraulisch verbunden. Besonders bevorzugt ist die Druckseite der ersten Pumpe mit der ersten Radbremsen über das stromlos geschlossene erste Einlassventil direkt verbunden und mit der zweiten Radbremse über das stromlos geschlossene zweite Einlassventil direkt verbunden. So ist an der der ersten Radverbindungsleitung zugeordneten ersten Radbremse sowie an der der zweiten Radverbindungsleitung zugeordneten zweiten Radbremse ein Druckaufbau mit hoher Dynamik möglich.

Bevorzugt ist die erste Radverbindungsleitung über ein erstes Auslassventil mit dem ersten Druckmittelvorratsbehälter und die zweite Radverbindungsleitung über ein zweites Auslassventil mit dem ersten Druckmittelvorratsbehälter verbunden. So sind auf diesen Radbremsen, besonders bevorzugt auf der Vorderachse des Fahrzeugs, radindividuelle Druckabbauphasen möglich.

Bevorzugt ist die zweite Druckseite über ein drittes Einlassventil mit der dritten Radverbindungsleitung und über ein viertes Einlassventil mit der vierten Radverbindungsleitung verbunden ist. Besonders bevorzugt ist die Druckseite der zweiten Pumpe mit der dritten Radbremsen über das stromlos geschlossene dritte Einlassventil direkt verbunden und mit der vierten Radbremse über das stromlos geschlossene vierte Einlassventil direkt verbunden. So ist an der der dritten Radverbindungsleitung zugeordneten dritten Radbremse sowie an der der vierten Radverbindungsleitung zugeordneten vierten Radbremse ein Druckaufbau mit hoher Dynamik möglich.

Die dritte Radverbindungsleitung ist bevorzugt über ein drittes Auslassventil mit dem zweiten Druckmittelvorratsbehälter und die vierte Radverbindungsleitung über ein viertes Auslassventil mit dem zweiten Druckmittelvorratsbehälter verbunden. So sind, ggf. auch, auf diesen Radbremsen radindividuelle Druckabbauphasen möglich.

Bevorzugt ist die zweite Druckseite über ein drittes Einlassventil mit der dritten Radverbindungsleitung hydraulisch verbunden und die dritte Radverbindungsleitung über ein viertes Einlassventil mit der vierten Radverbindungsleitung hydraulisch verbunden. So kann eine Druckmodulation an den beiden der dritten und vierten Radverbindungsleitung zugeordneten (dritter und vierter) Radbremsen nur gemeinsam stattfinden, dafür umfasst die Bremsanlage jedoch weniger schaltbare Ventile, da auf ein weiteres Auslassventil in diesem Kreis verzichtet werden kann.

Bevorzugt ist die dritte Radverbindungsleitung über ein drittes Auslassventil mit dem zweiten Druckmittelvorratsbehälter verbunden. Das eine der zweiten Pumpe zugeordnete (dritte) Auslassventil ist somit für Druckabbauphasen an dritter und vierter Radbremse ausreichend.

Gemäß einer weiteren bevorzugten Ausführungsform der Erfindung ist die erste Druckseite über ein zweites Einlassventil mit der zweiten Radverbindungsleitung verbunden und die zweite Radverbindungsleitung über ein erstes Einlassventil mit der ersten Radverbindungsleitung verbunden. So kann eine Druckmodulation an den beiden der ersten und zweiten Radverbindungsleitung zugeordneten (ersten und zweiten) Radbremsen nur gemeinsam stattfinden, dafür umfasst die Bremsanlage jedoch weniger schaltbare Ventile, da auf ein weiteres Auslassventil in diesem Kreis verzichtet werden kann.

Bevorzugt ist die zweite Radverbindungsleitung über ein zweites Auslassventil mit dem ersten Druckmittelvorratsbehälter verbunden. Das eine der ersten Pumpe zugeordnete (zweite) Auslassventil ist somit für Druckabbauphasen an erster und zweiter Radbremse ausreichend.

Es ist bevorzugt, dass in jeder der Radverbindungsleitungen ein stromlos offenes, vorteilhafterweise analog ansteuerbares oder analogisiert ausgeführtes, Trennventil angeordnet ist. Die Trennventile ermöglichen eine hydraulische Abtrennung der ersten elektrohydraulischen Bremsensteuervorrichtung im Falle eines Druckaufbaus mittels der zweiten elektrohydraulische Bremsensteuervorrichtung.

Jedem Trennventil kann ein in Richtung der ersten Bremsensteuervorrichtung sperrendes Rückschlagventil parallel geschaltet sein. Wenn die erste Bremsensteuervorrichtung derart ausgeführt ist, dass der Fahrer in einem stromlosen Zustand der ersten Bremsensteuervorrichtung einen Bremsdruck an den radindividuellen Ausgängen aufbauen kann, umfasst die zweite Bremsensteuervorrichtung bevorzugt keine solchen Rückschlagventile. Wenn die erste Bremsensteuervorrichtung derart ausgeführt ist, dass der Fahrer in einem stromlosen Zustand der ersten Bremsensteuervorrichtung keinen Bremsdruck an den radindividuellen Ausgängen aufbauen kann, umfasst die zweite Bremsensteuervorrichtung bevorzugt solche Rückschlagventile.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein drittes Ausführungsbeispiel einer erfindungsgemäßen Bremsanlage,
- Fig. 4: ein viertes Ausführungsbeispiel einer erfindungsgemäßen Bremsanlage,
- Fig. 5: ein fünftes Ausführungsbeispiel einer erfindungsgemäßen Bremsanlage, und
- Fig. 6: ein sechstes Ausführungsbeispiel einer erfindungsgemäßen Bremsanlage.

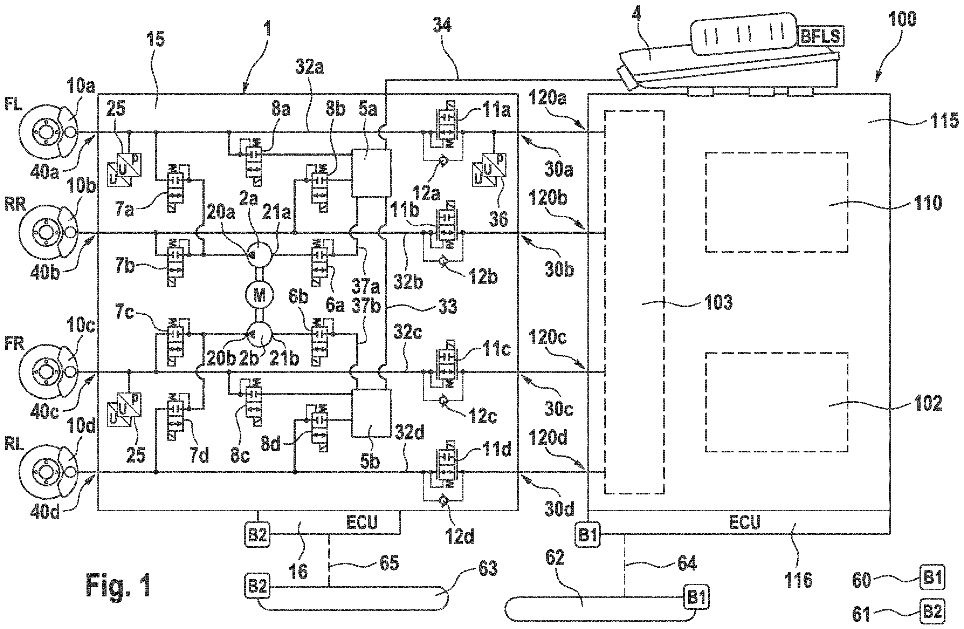

In Fig. 1 ist ein erstes Ausführungsbeispiel einer erfindungsgemäßen Bremsanlage für Kraftfahrzeuge schematisch dargestellt. Die Bremsanlage umfasst vier hydraulisch betätigbare Radbremsen 10a-10d, eine erste elektrohydraulische Bremsensteuervorrichtung 100, welche für jede der vier Radbremsen 10a-10d einen radindividuellen Ausgang (beispielsgemäß Ausgangsanschluss) 120a-120d umfasst, einen unter Atmosphärendruck stehenden Hauptdruckmittelvorratsbehälter 4 und eine zweite elektrohydraulische Bremsensteuervorrichtung 1. Die zweite Bremsensteuervorrichtung 1 umfasst für jede der vier Radbremsen 10a-10d einen radindividuellen Eingang (beispielsgemäß Eingangsanschluss) 30a-30d, der mit dem der entsprechenden Radbremse 10a-10d zugeordneten radindividuellen Ausgang 120a-120d der ersten Bremsensteuervorrichtung 100 verbunden ist, einen radindividuellen Radausgang (beispielsgemäß Radausgangsanschluss) 40a-40d, welcher mit der entsprechenden Radbremse 10a-10d verbunden ist, sowie eine hydraulische Radverbindungsleitung 32a-32d, welche den Eingang 30a-30d mit dem Radausgang 40a-40d verbindet. D.h. die Bremsensteuervorrichtung 1 ist hydraulisch in Reihe zwischen die Bremsensteuervorrichtung 100 und die Radbremsen 10a-10d geschaltet.

Die zweite Bremsensteuervorrichtung 1 umfasst weiterhin eine erste Pumpe 2a mit einer Druckseite 20a und einer Saugseite 21a und eine zweite Pumpe 2b mit einer Druckseite 20b und einer Saugseite 21b. Die Druckseite 20a der Pumpe 2a ist mit zwei der vier Radverbindungsleitungen 32a-32d, beispielsgemäß mit der Radverbindungsleitung 32a und der Radverbindungsleitung 32b, verbunden, während die Druckseite 20b mit den zwei anderen Radverbindungsleitungen, beispielsgemäß mit der Radverbindungsleitung 32c und der Radverbindungsleitung 32d, verbunden ist.

Die Pumpen 2a, 2b werden von einem gemeinsamen Elektromotor M angetrieben.

In die zweite Bremsensteuervorrichtung 1 sind ein erster und ein zweiter, je unter Atmosphärendruck stehender Druckmittelvorratsbehälter 5a, 5b integriert. Die Druckmittelvorratsbehälter 5a, 5b sind vorteilhafterweise mit dem Hauptdruckmittelvorratsbehälter 4 verbunden. Beispielsgemäß ist der Druckmittelvorratsbehälter 5a (direkt) mit dem Hauptdruckmittelvorratsbehälter 4 (über eine Ausgleichsleitung 34) hydraulisch verbunden und der Druckmittelvorratsbehälter 5b ist innerhalb der Bremsensteuervorrichtung 1 mit dem Druckmittelvorratsbehälter 5a über eine Ausgleichsleitung 33 hydraulisch verbunden. So wird nur ein Behälteranschluss an der Bremsensteuervorrichtung 1 benötigt. Alternativ können die Druckmittelvorratsbehälter 5a und 5b über getrennte Ausgleichsleitungen (direkt) mit dem Hauptdruckmittelvorratsbehälter 4 hydraulisch verbunden sein.

Ein in die Bremsensteuervorrichtung 1 integrierter Druckmittelvorratsbehälter 5a, 5b bietet den Vorteil, dass Druckmittel in der Vorrichtung 1 bereitgehalten wird und direkt aus dem Druckmittelvorratsbehälter angesaugt werden kann. Strömungswiderstände werden so minimiert und die Verfügbarkeit von Druckmittel zum Druckaufbau mittels der zweiten Bremsensteuervorrichtung 1 erhöht.

Der ersten Pumpe 20a ist der erste Druckmittelvorratsbehälter 5a und der zweiten Pumpe 20b ist der zweite Druckmittelvorratsbehälter 5b zugeordnet.

Beispielsgemäß ist die Saugseite 21a, 21b jeder Pumpe 2a, 2b über eine separate hydraulische Verbindungsleitung 37a, 37b mit einem elektrisch betätigbaren Ansaugventil 6a, 6b mit dem zugeordneten Druckmittelvorratsbehälter 5a, 5b verbunden. Die Ansaugventile 6a, 6b sind vorteilhafterweise stromlos geschlossen ausgeführt.

Beispielsgemäß kann die erste Pumpe 2a lediglich aus dem (ersten) Druckmittelvorratsbehälter 5a und die zweite Pumpe 2b lediglich aus dem (zweiten) Druckmittelvorratsbehälter 5b Druckmittel ansaugen.

Die der ersten Pumpe 2a zugeordneten Radbremsen 10a (zu Radverbindungsleitung 32a) und 10b (zu Radverbindungsleitung 32b) sind beispielsgemäß dem linken Vorderrad FL und dem rechten Hinterrad RR zugeordnet. Die der zweiten Pumpe 2b zugeordneten Radbremsen 10c (zu Radverbindungsleitung 32c) und 10d (zu Radverbindungsleitung 32d) sind dem rechten Vorderrad FR und dem linken Hinterrad RL zugeordnet (diagonale Kreisaufteilung).

Je Radbremse 10a-10d umfasst die zweite Bremsensteuervorrichtung 1 ein elektrisch betätigbares Trennventil 11a-11d, welches in der hydraulischen Verbindung (d.h. Radverbindungsleitung 32a-32d) zwischen dem Eingang 30a-30d und dem Radausgang 40a-40d angeordnet ist. Mittels der Trennventil 11a-11d kann z.B. die zweite Bremsensteuervorrichtung 1 hydraulisch von der ersten Bremsensteuervorrichtung 100 getrennt werden. Vorteilhafterweise sind die Trennventile 11a-11d stromlos offen ausgeführt, so dass bei einem Ausfall der Energieversorgung der zweiten Bremsensteuervorrichtung 1 die von der ersten Bremsensteuervorrichtung 100 bereitgestellten, radindividuellen Radbremsdrücke durch die Bremsensteuervorrichtung 1 durchgeleitet werden und an den Radausgängen 40a-40d anliegen. Beispielsgemäß sind die Trennventile 11a-11d analogisiert oder anlog ansteuerbar ausgeführt.

Optional kann den Trennventilen 11a-11d je ein in Richtung der Radbremse 10a-10d öffnendes Rückschlagventil 12a-12d parallel geschaltet sein, so dass ein Eingangsdruck an einem Eingangsanschluss 30a-30d, welcher größer als der zugeordnete Radbremsdruck in der zweiten Bremsensteuervorrichtung 1 ist, unabhängig vom Aktivierungszustand des Trennventils 11a-11d an die Radbremse 10a-10d weitergeleitet wird. Die zweite Bremsensteuervorrichtung 1 umfasst für jede Radbremse 10a-10d ein stromlos geschlossenes Einlassventil 7a-7d.

Beispielsgemäß ist die Druckseite 20a der Pumpe 2a über das erste Einlassventil 7a mit der ersten Radverbindungsleitung 32a und über das zweite Einlassventil 7b mit der zweiten Radverbindungsleitungen 32b verbunden. Die Druckseite 20b der Pumpe 2b ist über das dritte Einlassventil 7c mit der dritten Radverbindungsleitung 32c und über das vierte Einlassventil 7d mit der vierten Radverbindungsleitung 32d verbunden. Somit ist beispielsgemäß jede Pumpe 2a bzw. 2b mit ihrer Druckseite 20a bzw. 20b mit jeder der beiden ihr zugeordneten Radbremsen 10a und 10b bzw. 10c und 10d über ein einziges stromlos geschlossenes Einlassventil (direkt) verbunden.

Zum Abbau von Radbremsdruck, z.B. während einer Antiblockierregelung, ist beispielsgemäß je Radbremse 10a-10d ein, vorteilhafterweise stromlos geschlossenes, Auslassventil 8a-8d vorgesehn. Je Radbremse 10a-10d ist der Ausgangsdruckanschluss 40a-40d, und somit die Radbremse, über das Auslassventil 8a-8d mit einem der Druckmittelvorratsbehälter 5a, 5b verbindbar. Beispielsgemäß sind die erste Radverbindungsleitung 32a über ein erstes Auslassventil 8a und die zweite Radverbindungsleitung 32b über ein zweites Auslassventil 8b mit dem ersten Druckmittelvorratsbehälter 5a verbunden, während die dritte Radverbindungsleitung 32c über ein drittes Auslassventil 8c und die vierte Radverbindungsleitung 32d über ein viertes Auslassventil 8d mit dem zweiten Druckmittelvorratsbehälter 5b verbunden sind.

Beispielsgemäß ist in der Bremsensteuervorrichtung 1 für eine der Radbremsen je Pumpe 2a, 2b, beispielsgemäß für die Radbremsen 10a und 10c, ein Drucksensor 25 zur Bestimmung des Druckes an den zugehörigen Radausgängen (beispielsgemäß 40a, 40c) vorgesehen. Zusätzlich umfasst Bremsensteuervorrichtung 1 beispielsgemäß einen Drucksensor 36 zur Bestimmung des Druckes an einem der Eingangsanschlüsse (beispielsgemäß 30a).

Beispielsgemäß umfasst die erste Bremsensteuervorrichtung 100 eine Druckregelventilanordnung 103 zum Einstellen radindividueller Drücke an den radindividuellen Ausgängen 120a-120d. Z.B. umfasst die Druckregelventilanordnung 103 ein Einlassventil und ein Auslassventil je Radbremse 10a-10d. Die erste Bremsensteuervorrichtung 100 ist bevorzugt ein an sich bekanntes, fremdansteuerbares "by-wire"-Bremssystem, welches eine elektrisch ansteuerbare Druckquelle 102 zum elektrisch gesteuerten Aufbau von Bremsdruck umfasst. Um für den Fall eines Total-Ausfalls der elektrischen Energieversorgung der Bremsanlage eine Notfall-Betätigung der Bremsanlage durch den Fahrer zu ermöglichen (sog. hydraulische Rückfallebene), umfasst die erste Bremsensteuervorrichtung 100 beispielsgemäß auch einen durch ein Bremspedal betätigbaren Hauptbremszylinder, welcher in den Figuren stark schematisch durch das Bezugszeichen 110 angedeutet ist.

Bremsensteuervorrichtung 1 ist beispielsgemäß als eine unabhängige Baueinheit bzw. ein Modul, z.B. als ein Bremsensteuergerät mit einer elektronischen Steuer- und Regeleinheit (ECU) 16 und einer hydraulischen Steuer- und Regeleinheit (HCU) 15 ausgeführt.

Ebenso ist Bremsensteuervorrichtung 100 als eine unabhängige Baueinheit bzw. ein Modul, z.B. als ein Bremsensteuergerät mit einer elektronischen Steuer- und Regeleinheit (ECU) 116 und einer hydraulischen Steuer- und Regeleinheit (HCU) 115 ausgeführt.

Alternativ können die hydraulischen Komponenten der Bremsensteuervorrichtung 100 und 1 auch in einem gemeinsamen Modul angeordnet sein, jedoch ist es vorteilhaft, wenn auch dann zwei entsprechende, unabhängige elektronische Steuer- und Regeleinheiten 16 und 116 vorgesehen sind.

Zur Versorgung der Bremsanlage mit elektrischer Energie sind zwei, voneinander unabhängige elektrische Energiequellen 60, 61 vorgesehen. Beispielsgemäß wird die erste Bremsensteuervorrichtung 100 von der ersten elektrischen Energiequelle 60 und die zweite Bremsensteuervorrichtung 1 von der zweiten elektrischen Energiequelle 61 versorgt.

Um die Bremsanlage für automatisiert fahrende Kraftfahrzeuge nutzen zu können ist, sind beispielsgemäß zwei unabhängige Fahrzeug-Steuereinheiten 62, 63 vorgesehen, welche die Bremsanforderungen einer Autopilot-Funktion an die Bremsanlage übermitteln. Fahrzeug-Steuereinheit 62 ist über einen Datenbus 64 mit der elektronischen Steuer- und Regeleinheit 116 der Bremsensteuervorrichtung 100 verbunden. Fahrzeug-Steuereinheit 63 ist über einen Datenbus 65 mit der elektronischen Steuer- und Regeleinheit 16 der Bremsensteuervorrichtung 1 verbunden.

Beispielsgemäß wird neben der elektronischen Steuer- und Regeleinheit 116 der ersten Bremsensteuervorrichtung 100 auch die zugeordnete Fahrzeug-Steuereinheit 62 von der ersten elektrischen Energiequelle 60 mit elektrischer Energie versorgt (mit B1 gekennzeichnet). Entsprechend werden die Fahrzeug-Steuereinheit 66 wie die elektronische Steuer- und Regeleinheit 16 von der zweiten elektrischen Energiequelle 61 versorgt (mit B2 gekennzeichnet).

Beispielsgemäß übernimmt die erste Bremsensteuervorrichtung 100 (reguläres Hauptbremsmodul) den Systemdruckaufbau sowie die Bereitstellung von radindividuellen Radbremsdrücken im normalen, insbesondere fehlerfreien, Bremsbetrieb und die zweite Bremsensteuervorrichtung 1 steht für den Fall bereit, dass die Bremsensteuervorrichtung 100 teilweise oder vollständig ausfällt. In dieser Situation übernimmt die Bremsensteuervorrichtung 1 mittels der Pumpen 2a, 2b den Druckaufbau. Bremsensteuervorrichtung 1 kann elektrisch gesteuert, z.B. fahrerunabhängig, Druck aufbauen und radindividuell mittels der Ventile 7a-7d, 8a-8d modulieren.

Die beispielsgemäße Bremsanlage der Fig. 1 bietet den Vorteil, dass mittels der zweiten Bremsensteuervorrichtung 1 ein zweikreisiger Druckaufbau möglich ist. Dabei ist eine individuelle Druckmodulation auf jeder Radbremse 10a-0d möglich. Jede Pumpe 2a, 2b hat Zugriff auf einen (eigenen) internen Druckmittelvorratsbehälter. Die zweite Bremsensteuervorrichtung 1 umfasst beispielsgemäß vierzehn elektrisch betätigbare Ventile.

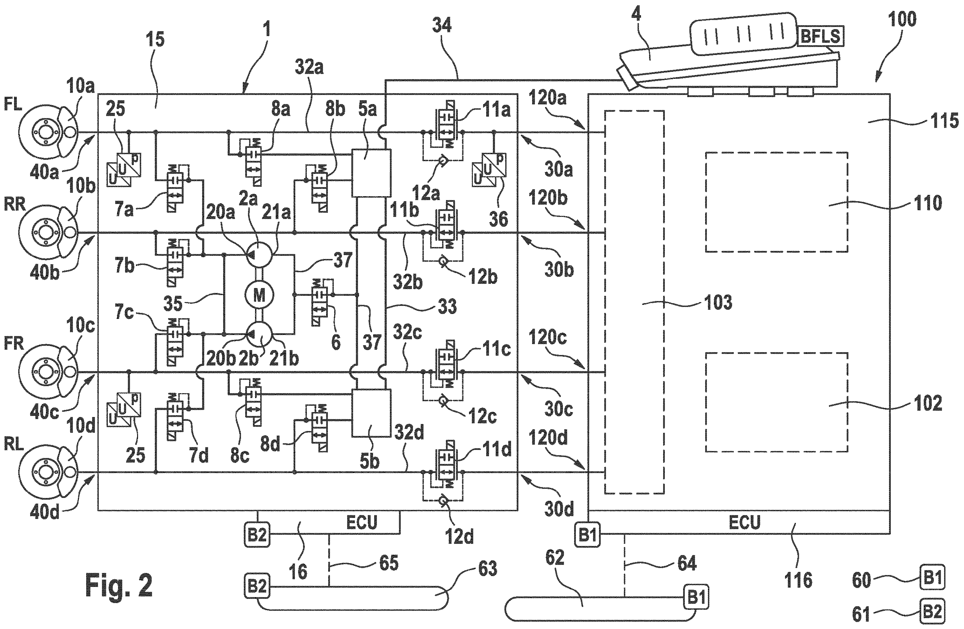

Die Bremsanlagen der Ausführungsbeispiele der Fig. 2 bis 6 entsprechen in vielen Komponenten dem Ausführungsbeispiel der Fig. 1, weshalb im Folgenden im Wesentlichen auf die Abweichungen bzw. Unterschiede der einzelnen Ausführungsbeispiele eingegangen wird.

In Fig. 2 ist ein zweites Ausführungsbeispiel einer erfindungsgemäßen Bremsanlage schematisch dargestellt. Im Unterschied zum ersten Ausführungsbeispiel der Fig. 1 sind bei der Bremsanlage der Fig. 2 zum einen die erste Druckseite 20a der Pumpe 2a und die zweite Druckseite 20b der Pumpe 2b hydraulisch über eine Verbindungsleitung 35 miteinander verbunden. Somit ist die erste Pumpe 2a auch mit der dritten und der vierten Radverbindungsleitung 32c, 32d verbunden bzw. verbindbar und die zweite Pumpe 2b ist auch mit der ersten und der zweiten Radverbindungsleitung 32a, 32b verbunden bzw. verbindbar. Die zweite elektrohydraulische Bremsensteuervorrichtung 1 kann daher einen einkreisigen Druckaufbau durchführen. Zum anderen unterscheidet sich das zweite Ausführungsbeispiel von dem ersten Ausführungsbeispiel dadurch, dass die Saugseite 21a der ersten Pumpe 2a mit der Saugseite 21b der zweiten Pumpe hydraulisch verbunden ist. Beide Saugseiten 21a, 21b sind mit beiden Druckmittelvorratsbehältern 5a, 5b verbunden. Von den Saugseiten 21a, 21b führt also eine gemeinsame Verbindungsleitung 37 zu dem ersten und dem zweiten Druckmittelvorratsbehälter 5a, 5b. In der Verbindungsleitung 37 ist ein einziges, vorteilhafterweise stromlos geschlossenes, Ansaugventil 6 angeordnet. Beide Pumpen 2a, 2b können somit je aus beiden Druckmittelvorratsbehältern 5a, 5b Druckmittel ansaugen.

Auch gemäß dem zweiten Ausführungsbeispiel sind je Radbremse 10-10d ein stromlos geschlossenes Einlassventil 7a-7d sowie ein stromlos geschlossenes Auslassventil 8a-8d entsprechend dem ersten Ausführungsbeispiel vorgesehen, so dass eine individuelle Druckmodulation auf jeder Radbremse 10a-10d möglich ist.

Die zweite Bremsensteuervorrichtung 1 umfasst beispielsgemäß dreizehn elektrisch betätigbare Ventile.

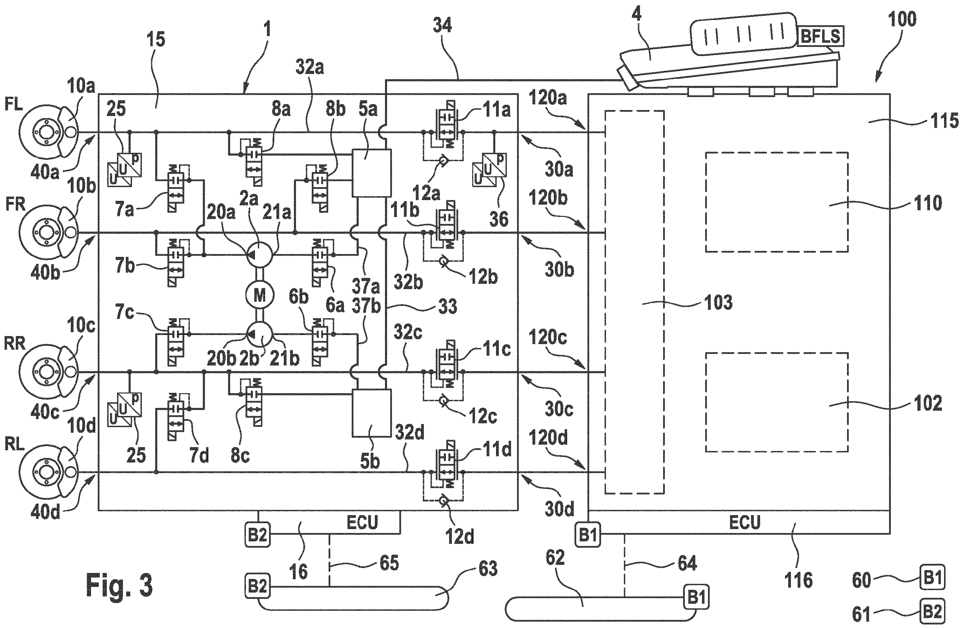

In Fig. 3 ist ein drittes Ausführungsbeispiel einer erfindungsgemäßen Bremsanlage schematisch dargestellt. Dieses unterscheidet sich von dem ersten Ausführungsbeispiel bezüglich der hydraulischen Anbindung der vierten Radbremse 10d an die zweite Druckseite 20b sowie an den zweiten Druckmittelvorratsbehälter 5b. Außerdem sind die der ersten Pumpe 2a zugeordneten Radbremsen 10a (zu Radverbindungsleitung 32a) und 10b (zu Radverbindungsleitung 32b) beispielsgemäß dem linken Vorderrad FL und dem rechten Vorderrad FR zugeordnet, und die der zweiten Pumpe 2b zugeordneten Radbremsen 10c (zu Radverbindungsleitung 32c) und 10d (zu Radverbindungsleitung 32d) sind dem rechten Hinterrad RR und dem linken Hinterrad RL zugeordnet (achsweise Kreisaufteilung).

Während gemäß dem ersten Ausführungsbeispiel die Druckseite 20b der Pumpe 2b über das Einlassventil 7c mit der dritten Radverbindungsleitung 32c der (dritten) Radbremse 10c sowie über das Einlassventil 7d mit der vierten Radverbindungsleitung 32d der (vierten) Radbremse 10d verbunden ist, ist gemäß dem dritten Ausführungsbeispiel die zweite Druckseite 20b über das dritte Einlassventil 7c mit der dritten Radverbindungsleitung 32c verbunden und die dritte Radverbindungsleitung 32c über das vierte Einlassventil 7d mit der vierten Radverbindungsleitung 32d verbunden. Die vierte Radbremse 10d ist somit über das vierte Einlassventil 7d mit der dritten Radverbindungsleitung 32c und so über das dritte Einlassventil 7c mit der zweiten Druckseite 20b verbunden. Radbremse 10d ist nicht (direkt) über ein einziges Einlassventil 7d mit der Druckseite 20b der zweiten Pumpe 2b verbunden (wie in Fig. 1).

Weiterhin ist gemäß dem dritten Ausführungsbeispiel keine (direkte) hydraulische Verbindung zwischen der vierten Radverbindungsleitung 32d und dem zweiten Druckmittelvorratsbehälter 5b (also auch kein viertes Auslassventil 8d) vorgesehen. Die dritte Radverbindungsleitung 32c bzw. die Radbremse 10c ist (direkt) über das dritte Auslassventil 8c mit dem zweiten Druckmittelvorratsbehälter 5b verbunden. Radverbindungsleitung 32d bzw. Radbremse 10d ist somit jedoch über das Einlassventil 7d mit der dritten Radverbindungsleitung 32c und so über das dritte Auslassventil 8c mit dem zweiten Druckmittelvorratsbehälter 5b verbunden bzw. verbindbar.

Die beispielsgemäße Bremsanlage der Fig. 3 bietet den Vorteil, dass mittels der zweiten Bremsensteuervorrichtung 1 ein zweikreisiger Druckaufbau möglich ist. Dabei ist auf der Vorderachse (FL, FR) eine separate Druckmodulation auf den beiden Radbremsen 10a, 10b möglich. Auf der Hinterachse (RR, RL) findet eine Druckmodulation auf beiden Rädern (gemeinsam) statt. Jede Pumpe 2a, 2b hat Zugriff auf einen (eigenen) internen Druckmittelvorratsbehälter. Die zweite Bremsensteuervorrichtung 1 umfasst beispielsgemäß dreizehn elektrisch betätigbare Ventile.

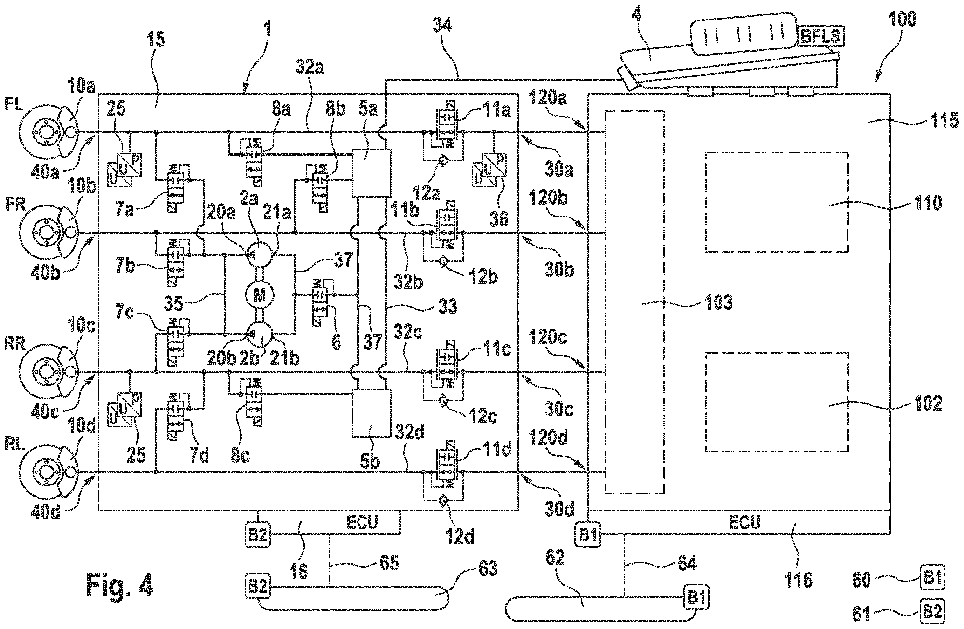

In Fig. 4 ist ein viertes Ausführungsbeispiel einer erfindungsgemäßen Bremsanlage schematisch dargestellt. Dieses unterscheidet sich von dem dritten Ausführungsbeispiel der Fig. 3 zum einen dadurch, dass die erste Druckseite 20a der Pumpe 2a und die zweite Druckseite 20b der Pumpe 2b hydraulisch über eine Verbindungsleitung 35 miteinander verbunden sind, und zum anderen dadurch, dass die Saugseiten 21a, 21b hydraulisch verbunden sind und über ein stromlos geschlossenes Ansaugventil 6 mit den beiden Druckmittelvorratsbehältern 5a, 5b verbunden sind (entsprechend dem zweiten Ausführungsbeispiel).

Die beispielsgemäße Bremsensteuervorrichtung 1 kann daher einen einkreisigen Druckaufbau durchführen. Beide Pumpen 2a, 2b können je aus beiden Druckmittelvorratsbehältern 5a, 5b Druckmittel ansaugen. Wie im dritten Ausführungsbeispiel ist auf der Vorderachse (FL, FR) eine separate Druckmodulation auf den beiden Radbremsen 10a, 10b möglich. Auf der Hinterachse (RR, RL) findet eine Druckmodulation auf beiden Rädern (gemeinsam) statt. Die Bremsensteuervorrichtung 1 umfasst beispielsgemäß zwölf elektrisch betätigbare Ventile.

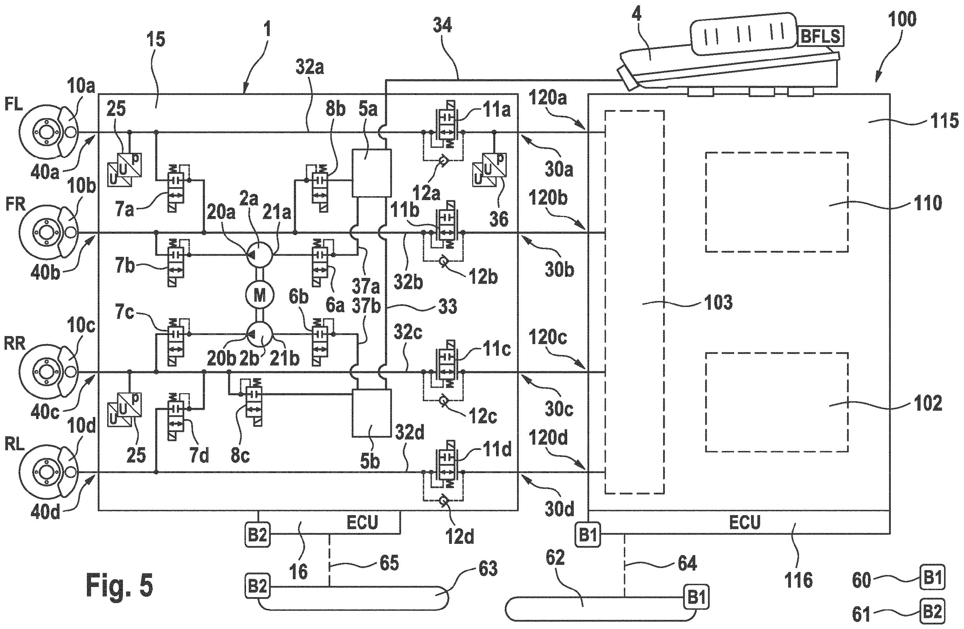

In Fig. 5 ist ein fünftes Ausführungsbeispiel einer erfindungsgemäßen Bremsanlage schematisch dargestellt. Es unterscheidet sich von dem dritten Ausführungsbeispiel der Fig. 3 bezüglich der hydraulischen Anbindung der ersten Radbremse 10a an die erste Druckseite 20a sowie an den ersten Druckmittelvorratsbehälter 5a. Die Anbindung der ersten Radbremse 10a an Pumpe 2a und Druckmittelvorratsbehälter 5a entspricht der anhand von Fig. 3 erläuterten Anbindung der vierten Radbremse 10d an Pumpe 2b und Druckmittelvorratsbehälter 5b.

Entsprechend ist die Druckseite 20a über das zweite Einlassventil 7b mit der zweite Radverbindungsleitung 32b verbunden und die zweite Radverbindungsleitung 32b ist über das erste Einlassventil 7a mit der ersten Radverbindungsleitung 32a verbunden. Die erste Radbremse 10a ist somit über das erste Einlassventil 7a mit der zweiten Radverbindungsleitung 32b und dann über das zweite Einlassventil 7b mit der ersten Druckseite 20a verbunden. Radbremse 10a ist nicht (direkt) über ein einziges Einlassventil 7a mit der Druckseite 20a der ersten Pumpe 2a verbunden (wie z.B. in Fig. 1 oder 3).

Weiterhin ist gemäß dem fünften Ausführungsbeispiel keine (direkte) hydraulische Verbindung zwischen der ersten Radverbindungsleitung 32a und dem ersten Druckmittelvorratsbehälter 5a (also auch kein erstes Auslassventil 8a) vorgesehen. Die zweite Radverbindungsleitung 32b bzw. die Radbremse 10b ist (direkt) über das zweite Auslassventil 8b mit dem Druckmittelvorratsbehälter 5a verbunden. Radverbindungsleitung 32a bzw. Radbremse 10a ist somit jedoch über das Einlassventil 7a mit der zweiten Radverbindungsleitung 32b und weiter über das zweite Auslassventil 8b mit dem ersten Druckmittelvorratsbehälter 5a verbunden bzw. verbindbar.

Die Bremsensteuervorrichtung 1 der Fig. 5 ermöglicht einen zweikreisigen Druckaufbau. Auf der Vorderachse (FL, FR) findet eine Druckmodulation auf beiden Radbremsen 10a, 10b (gemeinsam) statt. Auf der Hinterachse (RR, RL) findet ebenso eine Druckmodulation auf beiden Radbremsen 10c, 10d (gemeinsam) statt. Jede Pumpe 2a, 2b hat Zugriff auf einen (eigenen) internen Druckmittelvorratsbehälter. Die zweite Bremsensteuervorrichtung 1 umfasst beispielsgemäß zwölf elektrisch betätigbare Ventile.

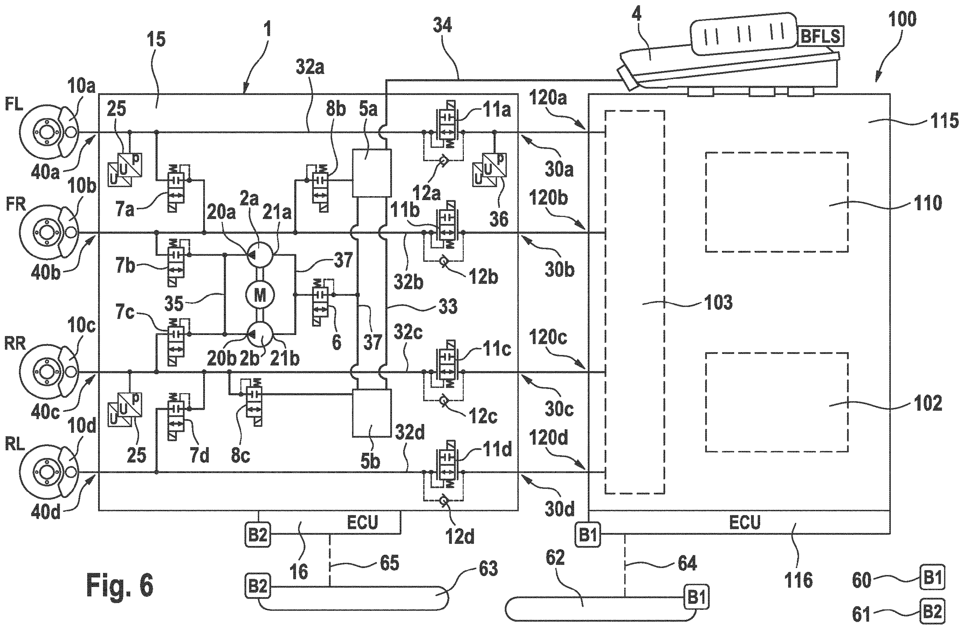

In Fig. 6 ist ein sechstes Ausführungsbeispiel einer erfindungsgemäßen Bremsanlage schematisch dargestellt. Dieses entspricht dem fünften Ausführungsbeispiel bezüglich der hydraulischen Anbindung der Radbremsen 10a, 10b bzw. 10c, 10d je Achse an die zugeordnete Pumpe 2a, 2b (d.h. der Anordnung der Einlassventile 7a-7d) sowie bzgl. des Vorhandenseins nur eines Auslassventils 8b bzw. 8c je Pumpe 2a, 2b bzw. je Druckmittelvorratsbehälter 5a, 5b. Im Unterschied zum fünften Ausführungsbeispiel sind (entsprechend wie in den Ausführungsbeispielen der Fig. 2 und 4) eine hydraulische Verbindung 35 der Druckseiten 20a und 20b sowie die gemeinsame hydraulische Verbindung 37 (in welcher das Ansaugventil 6 angeordnet ist) zwischen den Saugseiten 21a, 21b und den Druckmittelvorratsbehältern 5a, 5b vorgesehen.

Die Bremsensteuervorrichtung 1 der Fig. 6 ermöglicht einen einkreisigen Druckaufbau. Beide Pumpen 2a, 2b können je aus beiden Druckmittelvorratsbehältern 5a, 5b Druckmittel ansaugen. Auf der Vorderachse (FL, FR) findet eine Druckmodulation auf beiden Radbremsen 10a, 10b (gemeinsam) statt. Auf der Hinterachse (RR, RL) findet ebenso eine Druckmodulation auf beiden Radbremsen 10c, 10d (gemeinsam) statt. Die Bremsensteuervorrichtung 1 umfasst beispielsgemäß nur elf elektrisch betätigbare Ventile.

Optional kann bei jedem der sechs Ausführungsbeispiele der Fig. 1 bis 6 den Trennventilen 11a-11d je ein in Richtung der Radbremse 10a-10d öffnendes Rückschlagventil 12a-12d parallel geschaltet sein.

Bevorzugt wird die zweite Bremsensteuervorrichtung 1 ohne Rückschlagventile 12a-12d ausgeführt, wenn die vorgeschaltete erste Bremsensteuervorrichtung 100 derart ausgeführt ist, dass der Fahrer in einem stromlosen Zustand der ersten Bremsensteuervorrichtung 100, z.B. über einen bremspedalbetätigbaren Hauptbremszylinder, einen Bremsdruck an den radindividuellen Ausgängen 120a-120d aufbauen kann, d.h. einen hydraulischen Durchgriff auf die Radbremsen 10a-10d hätte. In diesem Falle darf die Bremsensteuervorrichtung 1 keine Rückschlagventile 12a-12d umfassen, die es erlauben, dass der Fahrer bei geschlossenen Trennventilen 11a-11d der zweiten Bremsensteuervorrichtung 1, z.B. in einer Autopilot-Betriebsart, direkt in die Radbremsen 10a-10d einbremsen kann. Somit wird sichergestellt, dass der Fahrer in der Autopilot-Betriebsart von den Radbremsen abgekoppelt ist.

Bevorzugt wird die zweite Bremsensteuervorrichtung 1 mit den Rückschlagventilen 12a-12d ausgeführt, wenn die vorgeschaltete erste Bremsensteuervorrichtung 100 derart ausgeführt ist, dass der Fahrer in einem stromlosen Zustand der ersten Bremsensteuervorrichtung 100 keinen Bremsdruck an den radindividuellen Ausgängen 120a-120d aufbauen kann, d.h. keinen hydraulischen Durchgriff auf die Radbremsen 10a-10d hätte. Dies wäre z.B. gegeben, wenn zwischen einem bremspedalbetätigbaren Hauptbremszylinder und den radindividuellen Ausgängen 120a-120d ein oder mehrere stromlos geschlossene Trennventile angeordnet wären.

In allen Ausführungsbeispielen ist die erste Pumpen 2a mit ihrer Druckseite 20a mit (zumindest) der (zweiten) Radbremse 10b über das stromlos geschlossene (zweite) Einlassventil 7b direkt verbunden, während die zweite Pumpen 2b mit ihrer Druckseite 20b mit (zumindest) der (dritten) Radbremse 10c über das stromlos geschlossene (dritte) Einlassventil 7c direkt verbunden ist. Bei dem ersten bis vierten Ausführungsbeispiel der Fig. 1 bis 4 ist die erste Pumpen 2a mit ihrer Druckseite 20a mit der (zweiten) Radbremse 10b über das stromlos geschlossene (zweite) Einlassventil 7b und mit der (ersten) Radbremse 10a über das stromlos geschlossene (erste) Einlassventil 7a direkt verbunden, während die zweite Pumpen 2b mit ihrer Druckseite 20b mit der (dritten) Radbremse 10c über das stromlos geschlossene (dritte) Einlassventil 7c und mit der (vierten) Radbremse 10d über das stromlos geschlossene (vierte) Einlassventil 7d direkt verbunden ist. Unter dem Begriff "über das Einlassventil direkt verbunden" wird verstanden, dass sich kein weiteres schaltbares Ventil in der hydraulischen Verbindung Druckseite zu Radbremse befindet. Hierdurch ist an den jeweiligen genannten Radbremsen eine Druckänderung mit hoher Dynamik möglich, da der Strömungswiderstand der Verbindung Druckseite zu Radbremse gering ist.

Den Bremsanlagen der Ausführungsbeispiele der Fig. 1 bis 6 ist gemein, dass relativ wenige Ventile vorhanden sind und dennoch eine Vielzahl von Bremsfunktionen mit radindividuellen Bremsdrücken an allen vier Rädern durchführbar sind.

Wenn auf einer Achse eine Druckmodulation auf den beiden Rädern gemeinsam stattfindet, geschieht dies bevorzugt nach dem an sich bekannten "select-low"-Prinzip. Hierbei erfolgt die Modulation des Bremsdruckes an der Achse nach dem Rad mit dem jeweils schlechtesten Reibschluss (größter Schlupf, geringste Radgeschwindigkeit).

## Patentansprüche

1. Bremsanlage für Kraftfahrzeuge umfassend
• zumindest vier hydraulisch betätigbare Radbremsen (10a-10d),
• einen unter Atmosphärendruck stehenden Hauptdruckmittelvorratsbehälter (4),
• eine erste elektrohydraulische Bremsensteuervorrichtung (100), welche für jede der vier Radbremsen einen radindividuellen Ausgang (120a-120d) umfasst, und
• eine zweite elektrohydraulische Bremsensteuervorrichtung (1), welche für jede der vier Radbremsen einen radindividuellen Eingang (30a-30d), der mit dem der Radbremse zugeordneten radindividuellen Ausgang (120a-120d) der ersten Bremsensteuervorrichtung verbunden ist, einen radindividuellen Radausgang (40a-40d), welcher mit der Radbremse verbunden ist, sowie eine hydraulische Radverbindungsleitung (32a-32d), welche den Eingang (30a-30d) mit dem Radausgang (40a-40d) verbindet, umfasst,
wobei die zweite Bremsensteuervorrichtung (1) eine erste Pumpe (2a) mit einer ersten Druckseite (20a) und einer ersten Saugseite (21a), wobei die erste Druckseite mit einer ersten und einer zweiten Radverbindungsleitung (32a, 32b) der vier Radverbindungsleitungen verbunden ist, und eine zweite Pumpe (2b) mit einer zweiten Druckseite (20b) und einer zweiten Saugseite (21b), wobei die zweite Druckseite mit den zwei anderen Radverbindungsleitungen, namentlich der dritten und der vierten Radverbindungsleitung (32c, 32d) verbunden ist, umfasst,
**dadurch gekennzeichnet, dass** die zweite Bremsensteuervorrichtung (1) zumindest einen ersten und einen zweiten unter Atmosphärendruck stehenden Druckmittelvorratsbehälter (5a, 5b) umfasst, welche in die zweite Bremsensteuervorrichtung integriert sind.

2. Bremsanlage nach Anspruch 1, **dadurch gekennzeichnet, dass** die zweite Bremsensteuervorrichtung (1) für jede Radbremse (10a-10d) ein stromlos geschlossenes Einlassventil (7a-7d) umfasst.

3. Bremsanlage nach Anspruch 1 oder 2, **dadurch gekennzeichnet, dass** jede der Pumpen (2a, 2b) mit ihrer Druckseite (20a, 20b) mit mindestens einer der Radbremsen (10b, 10c) über ein stromlos geschlossenes Einlassventil (7b, 7c) direkt verbunden ist.

4. Bremsanlage nach einem der Ansprüche 1 bis 3, **dadurch gekennzeichnet, dass** der erste und der zweite Druckmittelvorratsbehälter (5a, 5b) mit dem Hauptdruckmittelvorratsbehälter (4) verbunden sind.

5. Bremsanlage nach einem der Ansprüche 1 bis 4, **dadurch gekennzeichnet, dass** die erste Saugseite (21a) mit dem ersten Druckmittelvorratsbehälter (5a) über ein erstes Ansaugventil (6a) verbunden ist und die zweite Saugseite (21b) mit dem zweiten Druckmittelvorratsbehälter (5b) über ein zweites Ansaugventil (6b) verbunden ist.

6. Bremsanlage nach einem der Ansprüche 1 bis 4, **dadurch gekennzeichnet, dass** zusätzlich die erste Druckseite (20a) mit der zweiten Druckseite (20b) hydraulisch verbunden ist (35).

7. Bremsanlage nach Anspruch 6, **dadurch gekennzeichnet, dass** die erste Saugseite (21a) mit der zweiten Saugseite (21b) hydraulisch verbunden ist (37).

8. Bremsanlage nach Anspruch 6 oder 7, **dadurch gekennzeichnet, dass** die erste Saugseite (21a) und die zweite Saugseite (21b) über ein einziges Ansaugventil (6) mit dem ersten und dem zweiten Druckmittelvorratsbehälter (5a, 5b) verbunden ist.

9. Bremsanlage nach einem der Ansprüche 1 bis 8, **dadurch gekennzeichnet, dass** die erste Druckseite (20a) über ein erstes Einlassventil (7a) mit der ersten Radverbindungsleitung (32a) und über ein zweites Einlassventil (7b) mit der zweiten Radverbindungsleitung (32b) verbunden ist.

10. Bremsanlage nach Anspruch 9, **dadurch gekennzeichnet, dass** die ersten Radverbindungsleitung (32a) über ein erstes Auslassventil (8a) mit dem ersten Druckmittelvorratsbehälter (5a) und die zweite Radverbindungsleitung (32b) über ein zweites Auslassventil (8b) mit dem ersten Druckmittelvorratsbehälter (5a) verbunden ist.

11. Bremsanlage nach einem der Ansprüche 1 bis 10, **dadurch gekennzeichnet, dass** die zweite Druckseite (20b) über ein drittes Einlassventil (7c) mit der dritten Radverbindungsleitung (32c) und über ein viertes Einlassventil (7d) mit der vierten Radverbindungsleitung (32d) verbunden ist.

12. Bremsanlage nach Anspruch 11, **dadurch gekennzeichnet, dass** die dritte Radverbindungsleitung (32c) über ein drittes Auslassventil (8c) mit dem zweiten Druckmittelvorratsbehälter (5b) und die vierte Radverbindungsleitung (32d) über ein viertes Auslassventil (8d) mit dem zweiten Druckmittelvorratsbehälter (5b) verbunden ist.

13. Bremsanlage nach einem der Ansprüche 1 bis 10, **dadurch gekennzeichnet, dass** die zweite Druckseite (20b) über ein drittes Einlassventil (7c) mit der dritten Radverbindungsleitung (32c) verbunden ist und dass die dritte Radverbindungsleitung (32c) über ein viertes Einlassventil (7d) mit der vierten Radverbindungsleitung (32d) verbunden ist.

14. Bremsanlage nach Anspruch 13, **dadurch gekennzeichnet, dass** die dritte Radverbindungsleitung (32c) über ein drittes Auslassventil (8c) mit dem zweiten Druckmittelvorratsbehälter (5b) verbunden ist.

15. Bremsanlage nach einem der Ansprüche 1 bis 8, 13 oder 14, wenn nicht rückbezogen auf Anspruch 9, 10, 11 oder 12, **dadurch gekennzeichnet, dass** die erste Druckseite über ein zweites Einlassventil mit der zweiten Radverbindungsleitung verbunden ist und dass die zweite Radverbindungsleitung über ein erstes Einlassventil mit der ersten Radverbindungsleitung verbunden ist.

16. Bremsanlage nach Anspruch 15, **dadurch gekennzeichnet, dass** die zweite Radverbindungsleitung über ein zweites Auslassventil mit dem ersten Druckmittelvorratsbehälter verbunden ist.

## Claims

1. Brake system for motor vehicles, comprising
• at least four hydraulically actuatable wheel brakes (10a - 10d),
• a main pressure medium reservoir (4) that is under atmospheric pressure,
• a first electrohydraulic brake control device (100), which comprises a wheel-specific outlet (120a - 120d) for each of the four wheel brakes, and
• a second electrohydraulic brake control device (1), which, for each of the four wheel brakes, comprises a wheel-specific inlet (30a - 30d), which is connected to the wheel-specific outlet (120a - 120d) of the first brake control device that is associated with the wheel brake, a wheel-specific wheel outlet (40a - 40d), which is connected to the wheel brake, and a hydraulic wheel connecting line (32a - 32d), which connects the inlet (30a - 30d) to the wheel outlet (40a - 40d),
wherein the second brake control device (1) comprises a first pump (2a) with a first pressure side (20a) and a first suction side (21a), wherein the first pressure side is connected to a first and a second wheel connecting line (32a, 32b) of the four wheel connecting lines, and a second pump (2b) with a second pressure side (20b) and a second suction side (21b), wherein the second pressure side is connected to the two other wheel connecting lines, namely the third and the fourth wheel connecting line (32c, 32d), **characterized in that** the second brake control device (1) comprises at least a first and a second pressure medium reservoir (5a, 5b) that are under atmospheric pressure and are integrated into the second brake control device.

2. Brake system according to Claim 1, **characterized in that** the second brake control device (1) comprises an inlet valve (7a - 7d), which is closed when de-energized, for each wheel brake (10a - 10d).

3. Brake system according to Claim 1 or 2, **characterized in that** the pressure side (20a, 20b) of each of the pumps (2a, 2b) is connected directly to at least one of the wheel brakes (10b, 10c) via an inlet valve (7b, 7c) that is closed when de-energized.

4. Brake system according to one of Claims 1 to 3, **characterized in that** the first and the second pressure medium reservoir (5a, 5b) are connected to the main pressure medium reservoir (4).

5. Brake system according to one of Claims 1 to 4, **characterized in that** the first suction side (21a) is connected to the first pressure medium reservoir (5a) via a first intake valve (6a), and the second suction side (21b) is connected to the second pressure medium reservoir (5b) via a second intake valve (6b).

6. Brake system according to one of Claims 1 to 4, **characterized in that,** in addition, the first pressure side (20a) is connected hydraulically (35) to the second pressure side (20b).

7. Brake system according to Claim 6, **characterized in that** the first suction side (21a) is connected hydraulically (37) to the second suction side (21b).

8. Brake system according to Claim 6 or 7, **characterized in that** the first suction side (21a) and the second suction side (21b) are connected to the first and the second pressure medium reservoir (5a, 5b) via a single intake valve (6).

9. Brake system according to one of Claims 1 to 8, **characterized in that** the first pressure side (20a) is connected to the first wheel connecting line (32a) via a first inlet valve (7a), and to the second wheel connecting line (32b) via a second inlet valve (7b).

10. Brake system according to Claim 9, **characterized in that** the first wheel connecting line (32a) is connected to the first pressure medium reservoir (5a) via a first outlet valve (8a), and the second wheel connecting line (32b) is connected to the first pressure medium reservoir (5a) via a second outlet valve (8b).

11. Brake system according to one of Claims 1 to 10, **characterized in that** the second pressure side (20b) is connected to the third wheel connecting line (32c) via a third inlet valve (7c), and to the fourth wheel connecting line (32d) via a fourth inlet valve (7d).

12. Brake system according to Claim 11, **characterized in that** the third wheel connecting line (32c) is connected to the second pressure medium reservoir (5b) via a third outlet valve (8c), and the fourth wheel connecting line (32d) is connected to the second pressure medium reservoir (5b) via a fourth outlet valve (8d).

13. Brake system according to one of Claims 1 to 10, **characterized in that** the second pressure side (20b) is connected to the third wheel connecting line (32c) via a third inlet valve (7c), and **in that** the third wheel connecting line (32c) is connected to the fourth wheel connecting line (32d) via a fourth inlet valve (7d).

14. Brake system according to Claim 13, **characterized in that** the third wheel connecting line (32c) is connected to the second pressure medium reservoir (5b) via a third outlet valve (8c).

15. Brake system according to one of Claims 1 to 8, 13 or 14, if not referred back to Claim 9, 10, 11 or 12, **characterized in that** the first pressure side is connected to the second wheel connecting line via a second inlet valve, and **in that** the second wheel connecting line is connected to the first wheel connecting line via a first inlet valve.

16. Brake system according to Claim 15, **characterized in that** the second wheel connecting line is connected to the first pressure medium reservoir via a second outlet valve.

## Revendications

1. Système de freinage pour véhicules automobiles, comprenant
- au moins quatre freins de roue pouvant être actionnés hydrauliquement (10a-10d),
- un réservoir de fluide sous pression principal (4) à la pression atmosphérique,
- un premier dispositif de commande de freinage électrohydraulique (100), qui comprend pour chacun des quatre freins de roue une sortie propre à chaque roue (120a-120d), et
- un deuxième dispositif de commande de freinage électrohydraulique (1), qui comprend pour chacun des quatre freins de roue une entrée propre à chaque roue (30a-30d) qui est reliée à la sortie propre à chaque roue (120a-120d) associée au frein de roue du premier dispositif de commande de freinage, une sortie de roue propre à chaque roue (40a-40d) qui est reliée au frein de roue, ainsi qu'une conduite de liaison de roue hydraulique (32a-32d) qui relie l'entrée (30a-30d) à la sortie de roue (40a-40d),
le deuxième dispositif de commande de freinage (1) comprenant une première pompe (2a) ayant un premier côté de pression (20a) et un premier côté d'aspiration (21a), le premier côté de pression étant relié à une première et une deuxième conduite de liaison de roue (32a, 32b) des quatre conduites de liaison de roue, et une deuxième pompe (2b) ayant un deuxième côté de pression (20b) et un deuxième côté d'aspiration (21b), le deuxième côté de pression étant relié aux deux autres conduites de liaison de roue, notamment la troisième et la quatrième conduite liaison de roue (32c, 32d),
**caractérisé en ce que** le deuxième dispositif de commande de freinage (1) comprend au moins un premier et un deuxième réservoir de fluide sous pression (5a, 5b) à la pression atmosphérique, qui sont intégrés au deuxième dispositif de commande de freinage.

2. Système de freinage selon la revendication 1, **caractérisé en ce que** le deuxième dispositif de commande de freinage (1) comprend, pour chaque frein de roue (10a-10d), une soupape d'admission fermée sans courant (7a-7d).

3. Système de freinage selon la revendication 1 ou 2, **caractérisé en ce que** chacune des pompes (2a, 2b) est directement reliée par son côté de pression (20a, 20b) à au moins un des freins de roue (10b, 10c) par l'intermédiaire d'une soupape d'admission fermée sans courant (7b, 7c).

4. Système de freinage selon l'une quelconque des revendications 1 à 3, **caractérisé en ce que** le premier et le deuxième réservoir de fluide sous pression (5a, 5b) sont reliés au réservoir de fluide sous pression principal (4).

5. Système de freinage selon l'une quelconque des revendications 1 à 4, **caractérisé en ce que** le premier côté d'aspiration (21a) est relié au premier réservoir de fluide sous pression (5a) par l'intermédiaire d'une première soupape d'aspiration (6a) et le deuxième côté d'aspiration (21b) est relié au deuxième réservoir de fluide sous pression (5b) par l'intermédiaire d'une deuxième soupape d'aspiration (6b).

6. Système de freinage selon l'une quelconque des revendications 1 à 4, **caractérisé en ce qu'**en outre, le premier côté de pression (20a) est relié hydrauliquement (35) au deuxième côté de pression (20b).

7. Système de freinage selon la revendication 6, **caractérisé en ce que** le premier côté d'aspiration (21a) est relié hydrauliquement (37) au deuxième côté d'aspiration (21b).

8. Système de freinage selon la revendication 6 ou 7, **caractérisé en ce que** le premier côté d'aspiration (21a) et le deuxième côté d'aspiration (21b) sont reliés au premier et au deuxième réservoir de fluide sous pression (5a, 5b) par l'intermédiaire d'une seule soupape d'aspiration (6).

9. Système de freinage selon l'une quelconque des revendications 1 à 8, **caractérisé en ce que** le premier côté de pression (20a) est relié à la première conduite de liaison de roue (32a) par l'intermédiaire d'une première soupape d'admission (7a) et à la deuxième conduite de liaison de roue (32b) par l'intermédiaire d'une deuxième soupape d'admission (7b).

10. Système de freinage selon la revendication 9, **caractérisé en ce que** la première conduite de liaison de roue (32a) est reliée au premier réservoir de fluide sous pression (5a) par l'intermédiaire d'une première soupape d'échappement (8a) et la deuxième conduite de liaison de roue (32b) est reliée au premier réservoir de fluide sous pression (5a) par l'intermédiaire d'une deuxième soupape d'échappement (8b).

11. Système de freinage selon l'une quelconque des revendications 1 à 10, **caractérisé en ce que** le deuxième côté de pression (20b) est relié à la troisième conduite de liaison de roue (32c) par l'intermédiaire d'une troisième soupape d'admission (7c) et à la quatrième conduite de liaison de roue (32d) par l'intermédiaire d'une quatrième soupape d'admission (7d).

12. Système de freinage selon la revendication 11, **caractérisé en ce que** la troisième conduite de liaison de roue (32c) est reliée au deuxième réservoir de fluide sous pression (5b) par l'intermédiaire d'une troisième soupape d'échappement (8c) et la quatrième conduite de liaison de roue (32d) est reliée au deuxième réservoir de fluide sous pression (5b) par l'intermédiaire d'une quatrième soupape d'échappement (8d).

13. Système de freinage selon l'une quelconque des revendications 1 à 10, **caractérisé en ce que** le deuxième côté de pression (20b) est relié à la troisième conduite de liaison de roue (32c) par l'intermédiaire d'une troisième soupape d'admission (7c) et **en ce que** la troisième conduite de liaison de roue (32c) est reliée à la quatrième conduite de liaison de roue (32d) par l'intermédiaire d'une quatrième soupape d'admission (7d).

14. Système de freinage selon la revendication 13, **caractérisé en ce que** la troisième conduite de liaison de roue (32c) est reliée au deuxième réservoir de fluide sous pression (5b) par l'intermédiaire d'une troisième soupape d'échappement (8c).

15. Système de freinage selon l'une quelconque des revendications 1 à 8, 13 ou 14, lorsqu'elles ne se rapportent pas à la revendication 9, 10, 11 ou 12, **caractérisé en ce que** le premier côté de pression est reliée à la deuxième conduite de liaison de roue par l'intermédiaire d'une deuxième soupape d'admission et **en ce que** la deuxième conduite de liaison de roue est reliée à la première conduite de liaison de roue par l'intermédiaire d'une première soupape d'admission.

16. Système de freinage selon la revendication 15, **caractérisé en ce que** la deuxième conduite de liaison de roue est reliée au premier réservoir de fluide sous pression par l'intermédiaire d'une deuxième soupape d'échappement.
